# EUROPÄISCHE PATENTSCHRIFT

(11) **EP 3 269 519 B1**
(45) Veröffentlichungstag und Bekanntmachung des Hinweises auf die Patenterteilung: **04.09.2019**
(21) Anmeldenummer: 17180901.5
(22) Anmeldetag: 12.07.2017
(51) Int. Cl.: B25J 15/06, B25J 15/00, B25J 19/00

(54) **VAKUUMGREIFVORRICHTUNG MIT GREIFBLOCK**
VACUUM GRIPPING DEVICE WITH GRIP BLOCK
DISPOSITIF DE VENTOUSE À VIDE COMPRENANT UN BLOC DE PRÉHENSION

(30) Priorität: 15.07.2016 DE 102016113146
(43) Veröffentlichungstag der Anmeldung: 17.01.2018
(73) Patentinhaber: JOMATIK GmbH, 72072 Tübingen (DE)
(72) Erfinder: Matheis, Johannes, 72070 Tübingen (DE)
(74) Vertreter: Müller Hoffmann & Partner

(56) Entgegenhaltungen:
- DE-A1-102007 048 410
- DE-A1-102009 028 105
- US-A1- 2006 131 905
- US-A1- 2011 115 243
- US-A1- 2016 059 425

## Beschreibung

Die Erfindung betrifft einen Greifblock für eine Vakuumgreifvorrichtung.

Vakuumgreifvorrichtungen sind bekannt. Es handelt sich dabei um Vakuumflächensauger zum Ansaugen von flächigen Teilen, um diese danach anheben zu können. Hierzu wird eine Hohlkammer mit einem Lochmuster versehen. Die Löcher erstrecken sich von der Hohlkammer nach außen, so dass nach Erzeugung eines Unterdrucks in der Hohlkammer, z.B. mittels einer Saugvorrichtung, eine Saugwirkung auf einen Gegenstand ausgeübt werden kann, der an den äußeren Enden der Löcher anliegt.

Wenn das anzuhebende Werkstück kleiner ist als die von Löchern durchdrungene Außenfläche des Greifers, liegen einige der Löcher zur Umgebung hin frei. Sie sind also nicht durch das Werkstück abgedeckt. Sofern die Anzahl der freiliegenden Löcher zu groß wird, kann von der Saugvorrichtung zu viel Luft angesaugt werden, so dass die Vakuum- bzw. Saugwirkung in der Hohlkammer nachlässt. Ein Abriss des Vakuums aufgrund von zu viel Fehlluft kann die Folge sein.

Zur Lösung dieses Problems ist es bekannt, jedes einzelne der Löcher mit einem Rückschlagventil zu versehen. Das Rückschlagventil, z.B. eine bewegliche Kugel, wird in das jeweilige Loch eingesetzt und in geeigneter Weise, z.B. durch einen zusätzlich eingeschraubten Ring oder eine nachfolgende Umformung des Lochrands gesichert, damit die Kugel nicht mehr aus dem Loch fallen kann.

Wenn bei dieser Vorrichtung ein Loch nicht durch ein Werkstück abgedeckt ist, kann viel Fehlluft angesaugt werden. Durch den in dem Loch entstehenden, die Kugel umströmenden Luftstrom wird die Kugel mitgerissen und gegen einen Bund gedrückt, wodurch das Loch abgedichtet wird. Die Kugel wird durch den stromabseitigen Unterdruck gegen den Bund gehalten und unterbindet einen weiteren Fehlluftstrom. Dadurch kann die Saugwirkung in der gesamten Anlage erhalten bleiben.

Die Herstellung eines derartigen Greifers ist aufwändig, da jedes Loch einzeln bearbeitet, mit der Kugel ausgestattet und letztere gesichert werden muss.

Aus der US 2011/0115243 A1 ist ein Sauggreifer mit einem einen Luftkanal bildenden Hauptkörper bekannt, in dem ein beweglicher Stößel angeordnet ist. Der Stößel ist in dem Luftkanal zwischen einer Schließstellung und einer Offenstellung bewegbar.

Der Erfindung liegt die Aufgabe zu Grunde, einen Greifblock für eine Vakuumgreifvorrichtung anzugeben, der einfacher herstellbar ist.

Die Aufgabe wird erfindungsgemäß durch einen Greifblock mit den Merkmalen von Anspruch 1 gelöst. Weiterentwicklungen sind in den abhängigen Ansprüchen angegeben.

Ein Greifblock für eine Vakuumgreifvorrichtung weist einen Hauptkörper auf, wobei in dem Hauptkörper wenigstens ein Luftkanal mit einer Einlassöffnung und einer Auslassöffnung ausgebildet ist, in dem Luftkanal ein beweglicher Stößel angeordnet ist, an der Auslassöffnung eine Saugvorrichtung zum bedarfsweisen Erzeugen eines Luftstroms von der Einlassöffnung über die Auslassöffnung hin zur Saugvorrichtung anschließbar ist. Stromab von dem Stößel ist in dem Luftkanal eine Verjüngung des Querschnitts des Luftkanals vorgesehen, wobei der Stößel in dem Luftkanal zwischen einer Schließstellung, in der der Stößel an der Verjüngung des Querschnitts anliegt und damit den Luftkanal verschließt, und einer Offenstellung, in der der Stößel einen Luftstrom durch den Luftkanal freigibt, bewegbar ist. Der Hauptkörper ist durch ein additives Fertigungsverfahren hergestellt ist.

Die Saug- bzw. Unterdruckvorrichtung ist nicht Teil der Vakuumgreifvorrichtung bzw. des Greifblocks. Sie kann an die Vakuumgreifvorrichtung z.B. über einen Schlauch oder ein Rohr angeschlossen sein.

So kann der Greifblock Teil einer Hohlkammer sein, in deren Innerem in einem Hohlraum der Unterdruck mittels der Saugvorrichtung erzeugt wird. Der Luftkanal bzw. die mehreren oder auch vielen Luftkanäle münden dann in der Hohlkammer.

Die Herstellung des Hauptkörpers mithilfe des additiven Fertigungsverfahrens ermöglicht es, auch komplexe Strukturen des Hauptkörpers und ggfs. weiterer Komponenten in einfacher Weise herzustellen, wie später noch erläutert wird.

Das additive Fertigungsverfahren kann ausgewählt sein aus der Gruppe 3-D-Druckverfahre oder selektives Lasersintern.

Der anzusaugende Gegenstand bzw. das Werkstück kann mit der Einlassöffnung in Kontakt gebracht und auf diese Weise angesaugt bzw. ergriffen werden.

Es ist möglich, den Greifblock als Einzelsauger mit einem Luftkanal auszubilden. Ebenso ist es aber auch möglich, mehrere oder gar viele Luftkanäle in dem Greifblock vorzusehen, um eine flächiges Kontaktieren des Werkstücks zu erreichen. Zumindest ein Teil der Luftkanäle kann dann in der gleichen Weise ausgestattet sein, um den Stößel in dem Luftkanal zu führen.

Gerade dann, wenn viele Luftkanäle vorgesehen sind, erweist sich das additive Fertigungsverfahren als besonders geeignet, um effektiv komplexe Strukturen zu erzeigen.

Die Verjüngung des Querschnitts des Luftkanals kann an der Auslassöffnung vorgesehen sein.

In dem Luftkanal kann an dem Hauptkörper stromauf von dem Stößel ein Anschlag vorgesehen sein, um ein Austreten des Stößels über die Einlassöffnung zu verhindern. Dabei kann der Anschlag zusammen mit dem Hauptkörper durch ein additives Fertigungsverfahren hergestellt sein. Das bedeutet, dass der Hauptkörper und der Anschlag in einem Fertigungsschritt gemeinsam herstellbar sind.

Der Anschlag kann an dem Hauptkörper im Bereich der Einlassöffnung, entfernt von der Auslassöffnung, vorgesehen sein.

Der Anschlag kann relativ zu dem Hauptkörper und/oder dem Luftkanal federnd beweglich sein, um ein Einsetzen des Stößels über die Einlassöffnung in Richtung der Auslassöffnung zu ermöglichen. Somit kann der Stößel in den Luftkanal eingesetzt werden, wenn sich der Anschlag federnd aus dem Luftkanal herausbewegt, z.B. in eine in der Wandung des Luftkanals ausgebildete Ausnehmung. Wenn der Stößel eingesetzt ist, federt der Anschlag zurück in den Luftkanal und damit in den Weg des Stößels, um eine Bewegung des Stößels aus dem Luftkanal heraus zu unterbinden.

Der Anschlag und der Hauptkörper können einstückig hergestellt sein.

Die Einlassöffnung kann zur Umgebung hin frei liegen und geeignet sein, um einen zu greifenden Gegenstand zu kontaktieren.

Der Stößel kann einen Querschnitt aufweisen, der derart kleiner als der Querschnitt des Luftkanals ist, dass zwischen dem Stößel und einer Wandung des Luftkanals ein Spalt besteht, wenn der Stößel in der Offenstellung steht. Der Querschnitt des Stößels muss aber größer sein als die Verjüngung, damit der Stößel sicher in der Schließstellung gehalten werden kann.

Der Stößel kann insbesondere als Kugel oder kegelartiger Körper ausgebildet sein. Dabei kann der Stößel z.B. als separate Stahl-, Gummi- oder Kunststoffkugel ausgebildet sein. Dabei sind auch andere Materialien für den Stößel möglich. Ebenso ist es aber auch möglich, den Stößel gleichzeitig mit dem Hauptkörper und damit dem Luftkanal im Rahmen der additiven Fertigung herzustellen. In diesem Fall ist für die Herstellung des Stößels (bzw. der mehreren Stößel, wenn mehrere Luftkanäle vorgesehen sind) kein gesonderter Fertigungsschritt erforderlich.

Der Stößel kann dabei auch als Teil des Hauptkörpers, z.B. als an dem Hauptkörper befestigte Membran ausgebildet sein. Dann lässt sich der Stößel besonders einfach zusammen mit dem Hauptkörper fertigen und ist aber dennoch relativ zu diesem bzw. dem Luftkanal beweglich, um die Auslassöffnung zu verschließen.

Der Stößel kann durch eine Feder in einer Ausgangsstellung gehalten werden, wobei die Ausgangsstellung einer Stellung entspricht, in der der Stößel die Auslassöffnung freigibt.

Die Feder kann an dem Hauptkörper abgestützt sein. Die durch die Feder bewirkte Ausgangsstellung kann der Offenstellung entsprechen. Dadurch ist es möglich, die Vakuumgreifvorrichtung auch mit nach oben gerichteter Einlassöffnung (Saugöffnung) zu betreiben, wenn der Stößel durch sein Eigengewicht nach unten gegen die Auslassöffnung gedrückt wird. Die Feder hält den Stößel in seiner Ausgangsstellung (Offenstellung). Erst dann, wenn der Luftstrom durch den Luftkanal bzw. den Spalt stark genug ist, wird der Stößel aus der Offenstellung in die Schließstellung bewegt.

Die den Stößel haltende Feder kann z.B. eine in den Luftkanal separat eingesetzte Metallfeder sein. Alternativ kann die Feder auch zusammen mit dem Hauptkörper durch ein additives Fertigungsverfahren hergestellt werden.

Zusammenfassend gesagt kann also der Hauptkörper einschließlich des Luftkanals gemeinsam mit weiteren Komponenten wie z.B. dem Stößel, der den Stößel stützenden Feder und/oder dem Anschlag in einem Fertigungsgang durch das additive Fertigungsverfahren hergestellt werden.

Der Hauptkörper kann eine Kontaktfläche aufweisen, wobei über die Kontaktfläche mehrere Luftkanäle verteilt angeordnet sind, in denen jeweils ein Stößel beweglich vorgesehen ist. Dabei lassen sich auch unterschiedliche Anordnungen der Luftkanäle bzw. verschiedene Lochmuster verwirklichen. Die Kontaktfläche ist geeignet, mit dem zu ergreifenden bzw. anzusaugenden Werkstück in Kontakt gebracht zu werden.

Diese und weitere Vorteile und Merkmale der Erfindung werden nachfolgend anhand eines Beispiels unter Zuhilfenahme der begleitenden Figuren näher erläutert. Es zeigen:
- **Figur 1**: einen Schnitt durch einen Greifblock;
- **Figur 2**: eine Perspektivansicht des Schnitts von Figur 1;
- **Figur 3**: eine perspektivische Untersicht des Perspektivansicht von Figur 2; und
- **Figur 4**: eine Untersicht des Greifblocks.

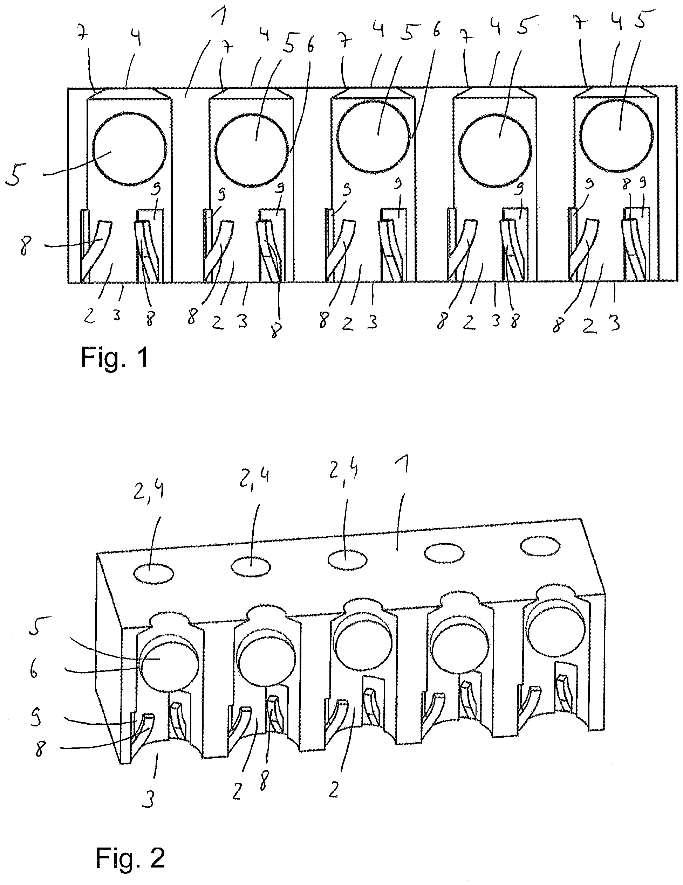

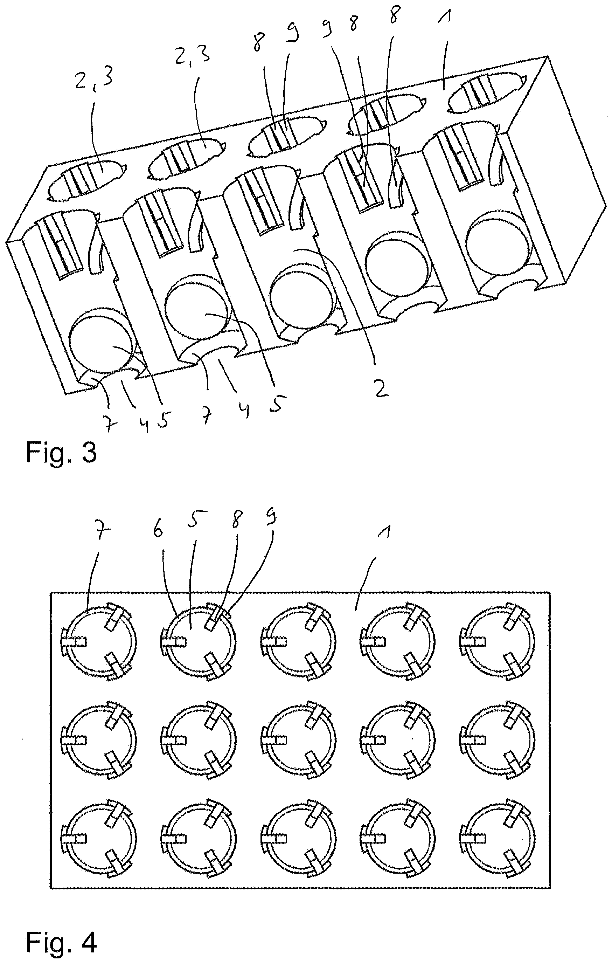

Die Figuren 1 bis 4 zeigen den gleichen Greifblock in unterschiedlichen Schnitten und Ansichten und werden daher gemeinsam beschrieben. Der Übersicht halber sind nicht immer sämtliche Bezugszeichen in allen Figuren eingetragen.

Der Greifblock weist einen Hauptkörper 1 auf, in dem mehrere Luftkanäle 2 ausgebildet sind.

Jeder der Luftkanäle 2 weist eine Einlassöffnung 3 und eine Auslassöffnung 4 auf. Die Einlassöffnung 3 ist geeignet, um mit einem anzuhebenden bzw. zu greifenden Werkstück (nicht dargestellt) gekoppelt zu werden.

Die Auslassöffnungen 4 sind mit einer nicht dargestellten Saug-, Vakuum- bzw. Unterdruckvorrichtung koppelbar. Z.B. können die Auslassöffnungen 4 in einer sich daran anschließenden Hohlkammer münden, die durch den Hauptkörper 1 abgedeckt ist und mit der Saugvorrichtung verbunden ist.

Mithilfe der Saugvorrichtung kann somit ein Luftstrom von der Einlassöffnung 3 durch den Luftkanal 2 und schließlich durch die Auslassöffnung 4 erzeugt werden.

In den Luftkanälen 2 ist jeweils ein als Kugel ausgebildeter Stößel 5 beweglich angeordnet. Der Stößel 5 kann auch mit einer anderen Geometrie ausgebildet sein, z.B. als Kegel o.ä. Ebenso ist es möglich, den Stößel 5 membranartig auszubilden, z.B. als an dem Hauptkörper 1 bzw. der Innenwandung des Luftkanals 2 befestigte Membran, die jedoch relativ zu dem Luftkanal 2 bzw. in dem Luftkanal 2 beweglich ist.

Der Stößel 5 weist einen Durchmesser auf, der kleiner als der Durchmesser des jeweiligen Luftkanals 2 ist, so dass zwischen dem kugelförmigen Stößel 5 und der Innenwandung des Luftkanals 2 ein Ringspalt 6 gebildet ist. Im Saugbetrieb kann die den Luftkanal 2 durchströmende Luft durch den Ringspalt 6 passieren.

Je stärker der Luftstrom durch den Ringspalt 6 ist, desto mehr wird der Stößel 5 mitgerissen und erreicht schließlich die Auslassöffnung 4. Dort ist eine Verjüngung 7 vorgesehen, gegen die der Stößel 5 schließlich gedrückt wird. In dieser Schließstellung des Stößels 5 wird der Luftkanal 2 blockiert und ein weiterer Luftstrom unterbunden. Aufgrund der Saugwirkung wird der Stößel 5 in der Schließstellung gehalten und gegen die Verjüngung 7 gedrückt.

Wenn die Saugwirkung beendet ist, kann sich der Stößel 5 wieder frei aus der Schließstellung in eine in den Figuren gezeigte Offenstellung bzw. Ausgangsstellung bewegen. Um zu verhindern, dass der Stößel 5 aus dem Luftkanal 2 über die Einlassöffnung 3 austreten und ggfs. verloren gehen kann, sind im Bereich der Einlassöffnung 3 drei Anschläge 8 vorgesehen. Ebenso können auch mehr oder weniger Anschläge 8 angeordnet sein.

Die Anschläge 8 sind als federnde Zungen ausgebildet, die sich von dem Hauptkörper 1 aus nach Innen in den Luftkanal 2 erstrecken. Rückwärtig von den Zungen bzw. Anschlägen 8 sind Ausnehmungen 9 ausgebildet, in die die Anschläge 8 gedrückt werden können, wenn die jeweiligen Stößel 5 eingesetzt werden. Die Anschläge 8 federn dann in die Ausnehmungen 9, um dem Stößel 5 auszuweichen.

Aufgrund ihrer Federwirkung nehmen die Anschläge 8 die in den Figuren gezeigte Stellung ein und sichern die Stößel 5 in den Luftkanälen 2.

Sämtliche Komponenten des Greifblocks können gemeinsam mit einem additiven Fertigungsverfahren, z.B. durch selektives Lasersintern hergestellt werden. Auch die Stößel 5 sind auf diesem Wege herstellbar. Ebenso ist es aber auch möglich, die Stößel 5 separat in die Luftkanäle 2 einzusetzen, z.B. als Stahlkugeln.

## Patentansprüche

1. Greifblock für eine Vakuumgreifvorrichtung, mit einem Hauptkörper (1); wobei
- in dem Hauptkörper (1) wenigstens ein Luftkanal (2) mit einer Einlassöffnung (3) und einer Auslassöffnung (4) ausgebildet ist;
- in dem Luftkanal (2) ein beweglicher Stößel (5) angeordnet ist;
- an der Auslassöffnung eine Saugvorrichtung zum bedarfsweisen Erzeugen eines Luftstroms von der Einlassöffnung über die Auslassöffnung hin zur Saugvorrichtung anschließbar ist;
- stromab von dem Stößel (5) in dem Luftkanal eine Verjüngung (7) des Querschnitts des Luftkanals (2) vorgesehen ist;
- der Stößel in dem Luftkanal zwischen einer Schließstellung, in der der Stößel an der Verjüngung des Querschnitts anliegt und damit den Luftkanal verschließt, und einer Offenstellung, in der der Stößel einen Luftstrom durch den Luftkanal freigibt, bewegbar ist;
- der Hauptkörper (1) durch ein additives Fertigungsverfahren hergestellt ist;
**dadurch gekennzeichnet, dass**
- in dem Luftkanal (2) an dem Hauptkörper (1) stromauf von dem Stößel (5) ein Anschlag (8) vorgesehen ist, um ein Austreten des Stößels (5) über die Einlassöffnung (3) zu verhindern;
- der Anschlag (8) zusammen mit dem Hauptkörper (1) durch ein additives Fertigungsverfahren hergestellt ist; und dass
- der Anschlag relativ zu dem Hauptkörper und/oder dem Luftkanal federnd beweglich ist, um ein Einsetzen des Stößels über die Einlassöffnung in Richtung der Auslassöffnung zu ermöglichen.

2. Greifblock nach Anspruch 1, wobei das additive Fertigungsverfahren ausgewählt ist aus der Gruppe 3-D-Druckverfahren, selektives Lasersintern.

3. Greifblock nach Anspruch 1 oder 2, wobei die Verjüngung des Querschnitts des Luftkanals (2) an der Auslassöffnung (4) vorgesehen ist

4. Greifblock nach einem der vorstehenden Ansprüche, wobei der Anschlag (8) an dem Hauptkörper im Bereich der Einlassöffnung, entfernt von der Auslassöffnung, vorgesehen ist.

5. Greifblock nach einem der vorstehenden Ansprüche, wobei der Anschlag (8) und der Hauptkörper (1) einstückig hergestellt sind.

6. Greifblock nach einem der vorstehenden Ansprüche, wobei die Einlassöffnung (3) zur Umgebung hin frei liegt und geeignet ist, um einen zu greifenden Gegenstand zu kontaktieren.

7. Greifblock nach einem der vorstehenden Ansprüche, wobei der Stößel (5) einen Querschnitt aufweist, der derart kleiner als der Querschnitt des Luftkanals (2) ist, dass zwischen dem Stößel und einer Wandung des Luftkanals ein Spalt besteht, wenn der Stößel in der Offenstellung steht.

8. Greifblock nach einem der vorstehenden Ansprüche, wobei der Stößel (5) als Kugel oder kegelartiger Körper ausgebildet ist.

9. Greifblock nach einem der vorstehenden Ansprüche, wobei
- der Stößel (5) durch eine Feder in einer Ausgangsstellung gehalten wird;
- die Ausgangsstellung einer Stellung entspricht, in der der Stößel die Auslassöffnung freigibt.

10. Greifblock nach Anspruch 9, wobei die den Stößel (5) haltende Feder
- eine in den Luftkanal separat eingesetzte Metallfeder ist; oder
- zusammen mit dem Hauptkörper durch ein additives Fertigungsverfahren hergestellt ist.

11. Greifblock nach einem der vorstehenden Ansprüche, wobei
- der Hauptkörper (1) eine Kontaktfläche aufweist;
- über die Kontaktfläche mehrere Luftkanäle (2) verteilt angeordnet sind, in denen jeweils ein Stößel (5) beweglich vorgesehen ist.

## Claims

1. Gripping block for a vacuum gripping device, with a main body (1); wherein
- formed in the main body (1) is at least one air channel (2) with an inlet opening (3) and an outlet opening (4);
- a movable plunger (5) is arranged in the air channel (2);
- a suction device can be connected to the outlet opening, for producing an air flow, as required for the purpose, from the inlet opening via the outlet opening to the suction device;
- provided downstream from the plunger (5) in the air channel is a tapering section (7) in the cross-section of the air channel (2);
- the plunger can be moved in the air channel between a closed position, in which the plunger is in contact at the tapering section of the cross-section and therefore closes the air channel, and a open position, in which the plunger gives clear passage to an air flow through the air channel;
- the main body (1) is produced by an additive manufacturing process;
**characterised in that**
- provided in the air channel (2) at the main body (1), upstream of the plunger (5), is a stop (8), in order to prevent the plunger (5) from emerging via the inlet opening (3);
- the stop (8) is produced together with the main body (1) by means of an additive manufacturing process; and that
- the stop is movable under spring force relative to the main body and/or to the air channel, in order to allow for the insertion of the plunger via the inlet opening in the direction of the outlet opening.

2. Gripping block according to claim 1, wherein the additive manufacturing process is selected from the group of 3-D printing processes; selective laser sintering.

3. Gripping block according to claim 1 or 2, wherein the tapering of the cross-section of the air channel (2) is provided at the outlet opening (4).

4. Gripping block according to any one of the preceding claims, wherein the stop (8) is provided at the main body in the region of the inlet opening, remote from the outlet opening.

5. Gripping block according to any one of the preceding claims, wherein the stop (8) and the main body (1) are produced as one piece.

6. Gripping block according to any one of the preceding claims, wherein the inlet opening (3) is freely open to the surrounding environment and is suitable for contacting an object which is to be gripped.

7. Gripping block according to any one of the preceding claims, wherein the plunger (5) exhibits a cross-section which is smaller than the cross-section of the air channel (2) in such a way that a gap comes into being between the plunger and a wall of the air channel when the plunger is in the open position.

8. Gripping block according to any one of the preceding claims, wherein the plunger (5) is configured as a sphere or conical-type body.

9. Gripping block according to any one of the preceding claims, wherein
- the plunger (5) is held by a spring in an initial position;
- the initial position corresponds to a position in which the plunger gives clearance to the outlet opening.

10. Gripping block according to claim 9, wherein the spring which holds the plunger (5)
- is a metal spring which is inserted separately into the air channel; or
- is produced together with the main body by an additive production process.

11. Gripping block according to any one of the preceding claims, wherein
- the main body (1) comprises a contact surface;
- wherein a plurality of air channels (2) are arranged distributed over the contact surface, provided in which in each case is a plunger (5) such as to be movable.

## Revendications

1. Bloc de préhension pour un dispositif de préhension à vide, avec un corps principal (1) ; dans lequel
- au moins un canal d'air (2) avec une ouverture d'entrée (3) et une ouverture de sortie (4) est réalisé dans le corps principal (1) ;
- un poussoir mobile (5) est agencé dans le canal d'air (2) ;
- un dispositif d'aspiration peut être raccordé à l'ouverture de sortie pour la génération selon les besoins d'un courant d'air de l'ouverture d'entrée vers le dispositif d'aspiration par l'ouverture de sortie;
- un effilement (7) de la section transversale du canal d'air (2) est prévu en aval du poussoir (5) dans le canal d'air ;
- le poussoir peut être déplacé dans le canal d'air entre une position de fermeture, dans laquelle le poussoir repose sur l'effilement de la section transversale et ferme ainsi le canal d'air, et une position d'ouverture, dans laquelle le poussoir libère un courant d'air à travers le canal d'air ;
- le corps principal (1) est réalisé par un procédé de fabrication additive ;
**caractérisé en ce que**
- une butée (8) est prévue dans le canal d'air (2) sur le corps principal (1) en amont du poussoir (5) pour empêcher une sortie du poussoir (5) via l'ouverture d'entrée (3) ;
- la butée (8) est réalisée conjointement avec le corps principal (1) par un procédé de fabrication additive ; et que
- la butée est mobile de manière élastique par rapport au corps principal et/ou au canal d'air pour permettre une insertion du poussoir via l'ouverture d'entrée en direction de l'ouverture de sortie.

2. Bloc de préhension selon la revendication 1, dans lequel le procédé de fabrication additive est sélectionné dans le groupe procédé d'impression 3D, frittage sélectif par laser.

3. Bloc de préhension selon la revendication 1 ou 2, dans lequel l'effilement de la section transversale du canal d'air (2) est prévu à l'ouverture de sortie (4).

4. Bloc de préhension selon l'une quelconque des revendications précédentes, dans lequel la butée (8) est prévue sur le corps principal dans la zone de l'ouverture d'entrée, à distance de l'ouverture de sortie.

5. Bloc de préhension selon l'une quelconque des revendications précédentes, dans lequel la butée (8) et le corps principal (1) sont réalisés d'un seul tenant.

6. Bloc de préhension selon l'une quelconque des revendications précédentes, dans lequel l'ouverture d'entrée (3) est libre par rapport à l'environnement et convient pour entrer en contact avec un objet à saisir.

7. Bloc de préhension selon l'une quelconque des revendications précédentes, dans lequel le poussoir (5) présente une section transversale qui est plus petite que la section transversale du canal d'air (2) de sorte qu'il y ait une fente entre le poussoir et une paroi du canal d'air, lorsque le poussoir est dans la position d'ouverture.

8. Bloc de préhension selon l'une quelconque des revendications précédentes, dans lequel le poussoir (5) est réalisé en tant que boule ou corps conique.

9. Bloc de préhension selon l'une quelconque des revendications précédentes, dans lequel
- le poussoir (5) est maintenu par un ressort dans une position de départ ;
- la position de départ correspond à une position dans laquelle le poussoir libère l'ouverture de sortie.

10. Bloc de préhension selon la revendication 9, dans lequel le ressort retenant le poussoir (5)
- est un ressort métallique inséré séparément dans le canal d'air ; ou
- est fabriqué conjointement avec le corps principal par un procédé de fabrication additive.

11. Bloc de préhension selon l'une quelconque des revendications précédentes, dans lequel
- le corps principal (1) présente une surface de contact ;
- plusieurs canaux d'air (2), dans lesquels respectivement un poussoir (5) est prévu de manière mobile, sont répartis sur la surface de contact.
